# EUROPÄISCHE PATENTSCHRIFT

(11) **EP 1 057 064 B1**
(45) Veröffentlichungstag und Bekanntmachung des Hinweises auf die Patenterteilung: **07.05.2003**
(21) Anmeldenummer: 99913078.4
(22) Anmeldetag: 17.02.1999
(51) Int. Cl.: G02B 21/24, G02B 21/30, G02B 7/16

(54) **MIKROSKOP**
MICROSCOPE
MICROSCOPE

(30) Priorität: 17.02.1998 DE 19807618
(43) Veröffentlichungstag der Anmeldung: 06.12.2000
(73) Patentinhaber: Leica Microsystems Heidelberg GmbH, 69120 Heidelberg (DE)
(72) Erfinder: ENGELHARDT, Johann, D-76669 Bad Schönborn (DE)
(74) Vertreter: Reichert, Werner F., Dr.
(86) Internationale Anmeldenummer: DE9900434
(87) Internationale Veröffentlichungsnummer: WO99042886

(56) Entgegenhaltungen:
- US-A- 5 410 429
- PATENT ABSTRACTS OF JAPAN vol. 096, no. 009, 30. September 1996 (1996-09-30) & JP 08 114750 A (OLYMPUS OPTICAL CO LTD), 7. Mai 1996 (1996-05-07)

## Beschreibung

Die Erfindung betrifft ein Mikroskop mit einem Objektive tragenden Objektivrevolver und mit einem Probenhalter zur Aufnahme einer Probe.

Mikroskope der hier in Rede stehenden Art sind in den unterschiedlichsten Ausführungsformen aus der Praxis bekannt. Bei reflektierenden Proben arbeiten diese im Auflichtverfahren, während transparente Proben im Durchlichtverfahren untersucht werden.

Insbesondere bei Anwendungen auf dem Gebiet der Biologie, der Medizin, etc. sind in zunehmendem Maße "lebende" Proben zu untersuchen. Dazu ist es oftmals erforderlich, die Probe unter physiologischen Bedingungen zu halten, und zwar auch während des Mikroskopierens. Dies bedeutet, daß bspw. Zellkulturen während der Beobachtung bzw. Messung bspw. bei 37°C gehalten werden müssen, um nämlich die physiologischen Bedingungen gewährleisten zu können.

Die Temperierung einer Probe ist insbesondere beim Mikroskopieren mit hohen Vergrößerungen problematisch, da nämlich zwischen einem Objektiv mit hoher Vergrößerung und der Probe ein nur äußerst kleiner Arbeitsabstand besteht. Selbst bei anfänglich gut temperierten Proben ist der Wärmeabfluß über das Mikroskopobjektiv so stark, daß die Temperatur unmittelbar am Beobachtungspunkt, d.h. am nächsten Punkt zum Mikroskopobjektiv, der Temperatur des Mikroskopobjektivs näher ist als der durch die Temperierung erzielten Temperatur um das Präparat bzw. unmittelbar am Präparat. Dies steht einer mikroskopischen Beobachtung bzw. Untersuchung einer temperierten Probe insbesondere bei hohen Vergrößerungen entgegen.

Aus der Praxis ist es bereits bekannt, die voranstehend geschilderte Situation durch unmittelbare Beheizung des jeweils im Einsatz befindlichen Objektivs zu verbessern. Dazu hat man bislang Heizmanschetten um das Objektiv herumgelegt, um nämlich nunmehr auch das Objektiv auf die gewünschte Probentemperatur zu bringen. Ein Wärmeabfluß über das Mikroskopobjektiv ist somit wirksam vermieden.

Die aus dem Stand der Technik bekannte Lösung des zuvor genannten Problems ist jedoch in der Praxis äußerst problematisch, da die Heizmanschette außerhalb des Objektivs - um das Objektiv herum - angebracht wird und beim Einsatz eines Objektivrevolvers die Nachbarpositionen dieses Objektivs zum Einsatz weiterer Objektive behindert. Außerdem ist die Anbringung der Heizmanschette mit einem doch ganz erheblichen Zeitaufwand verbunden, was insbesondere dann stört, wenn das Objektiv aufgrund unterschiedlicher Vergrößerungen ständig gewechselt werden muß. Der dabei entstehende Aufwand ist letztendlich nicht mehr vertretbar. Im übrigen ist es im Falle eines Objektivwechsels nicht nur erforderlich, die Heizmanschette umzumontieren. Vielmehr muß das neu eingesetzte Objektiv erneut aufgeheizt werden, so daß auch hier viel Zeit erforderlich ist. Eine zügige Untersuchung ist nach der aus der Praxis bekannten Methode zum Aufheizen einzelner Objektive jedenfalls nicht möglich.

Schließlich ist es in der Praxis auch erforderlich, Proben bzw. Präparate zu kühlen. Hierzu gelten die voranstehenden Ausführungen in gleichem Maße.

Der Erfindung liegt daher die Aufgabe zugrunde, ein Mikroskop der gattungsbildenden Art derart auszugestalten und weiterzubilden, daß auch bei ständigem Wechsel der im Einsatz befindlichen Objektive - über den Objektivrevolver - ein Wärmeabfluß über das jeweils im Einsatz befindliche Mikroskopobjektiv wirksam vermieden ist.

Das erfindungsgemäße Mikroskop der gattungsgemäßen Art löst die voranstehende Aufgabe durch die Merkmale des Patentanspruches 1. Danach ist ein solches Mikroskop dadurch gekennzeichnet, daß alle vom Objektivrevolver getragenen Objektive gleichzeitig über den Objektivrevolver temperierbar sind.

Erfindungsgemäß ist erkannt worden, daß die unmittelbare Temperierung eines Objektivs keinen Sinn macht, wenn vom Objektrevolver gleich mehrere Objektive getragen werden. Der verbleibende Raum zwischen den Objektiven reicht dann jedenfalls nicht aus, um die aus der Praxis bekannten Heizmanschetten um das im Einsatz befindliche Objektiv zu legen, während der Objektivhalter insgesamt mit Objektiven bestückt ist.

Des weiteren ist erkannt worden, daß man beim Mikroskopieren mit ständig wechselnden Vergrößerungen gleich sämtliche im Objektivrevolver befindlichen Objektive zu temperieren hat, da ansonsten ein ungewollter Wärmeabfluß von der Probe über das Mikroskopobjektiv stets dann stattfindet, wenn man über den Objektivrevolver ein neues Objektiv in die Arbeitsposition verbringt.

Schließlich ist erkannt worden, daß man dieses Problem dadurch lösen kann, daß man sämtliche vom Objektivrevolver getragenen Objektive gleichzeitig über den Objektivrevolver temperiert. Erfindungswesentlich ist demnach, daß die im Objektivrevolver befindlichen Objektive nicht etwa wie im Stand der Technik unmittelbar, sondern vielmehr mittelbar, temperiert werden, nämlich durch Wärmeleitung vom Objektivrevolver zu den einzelnen Objektiven. Äußere Maßnahmen an den Objektiven zur Temperierung dieser sind jedenfalls nicht mehr erforderlich.

Bei der erfindungsgemäßen Temperierung der Objektive kann es sich sowohl um ein Beheizen als auch um ein Kühlen handeln, je nachdem, ob die zu mikroskopierende Probe geheizt oder gekühlt werden soll. Entsprechend der Probentemperatur lassen sich jedenfalls die Objektive entweder beheizen oder kühlen, wobei von Bedeutung ist, daß am Objektiv eine konstante Temperatur gehalten werden kann. Dazu ist in weiter vorteilhafter Weise eine besondere Steuerung bzw. Regelung vorgesehen.

Die Temperierung des Objektivrevolvers könnte dadurch erreicht werden, daß um den Objektivrevolver herum eine Heiz-/Kühleinrichtung angeordnet ist. Diese Heiz-/Kühleinrichtung ist außerhalb des Handhabungsbereichs der Objektive angeordnet, so daß eine Behinderung der Objektive jedenfalls nicht stattfindet. Bei dieser Heiz-/Kühleinrichtung kann es sich in weiter vorteilhafter Weise um eine Heiz-/Kühlmanschette handeln, wie man sie bislang um das einzelne Objektiv herum gelegt hat.

Im Rahmen einer besonders vorteilhaften Ausgestaltung ist die Heiz-/Kühleinrichtung in den Objektivrevolver integriert. Insoweit wäre die Heiz-/Kühleinrichtung von außerhalb des Objektivrevolvers nicht sichtbar und könnte auch nicht behindern. Lediglich eine Leitung bzw. ein Leitungpaar zu dem Objektivrevolver läßt erkennen, daß dort eine besondere Maßnahme vorgesehen ist.

Die Heiz-/Kühleinrichtung könnte im konkreten eine mit Strömungsmedium durchströmbare Leitung umfassen. Bei dem Strömungsmedium könnte es. sich wiederum um eine Flüssigkeit, aber auch um ein Gas handeln. Das Strömungsmedium würde außerhalb des Objektivrevolvers geheizt oder gekühlt werden, wobei unmittelbar am Objektivrevolver bzw. innerhalb des Objektivrevolvers ein Thermostat zur Temperaturregelung vorgesehen sein kann. Das Erreichen einer vorgebbaren Endtemperatur sowie das Halten der Endtemperatur wäre somit mit einfachen Mitteln gewährleistet.

Alternativ könnte die Heiz-/Kühleinrichtung Peltierelemente umfassen, wobei diese je nach deren Polung sowohl kühlen als auch heizen können. Ebenso ist es denkbar, daß lediglich eine Heizeinrichtung vorgesehen ist, die Heizwiderstände umfaßt. Die Heiz-/Kühleinrichtung könnte des weiteren elektronisch geregelt sein, wobei die Ist-Temperatur unmittelbar am Objektivrevolver über eine geeignete Sensorik detektiert wird.

Zur Vermeidung einer ungewollten Temperaturleitung zwischen dem Objektivrevolver und dem übrigen Mikroskop bzw. dem Mikroskopstativ ist es von ganz besonderem Vorteil, wenn der Objektivrevolver gegenüber dem Mikroskopstativ thermisch isoliert ist. Dies könnte bspw. dadurch erfolgen, daß die Verbindung zwischen Objektivrevolver und Mikroskopstativ aus einem Kunststoff hergestellt ist, der als thermischer Isolator dient.

Im Rahmen einer besonders vorteilhaften Ausgestaltung und in Ergänzung der voranstehend genannten Maßnahmen ist der zur Aufnahme der Probe dienende Tisch bzw. der Probenhalter ebenfalls temperiert. Dazu könnte in den Probenhalter eine Heiz-/Kühleinrichtung integriert sein, wobei diese Heiz-/Kühleinrichtung des Probenhalters genauso ausgeführt sein kann, wie die Heiz-/Kühleinrichtung des Objektivrevolvers. So könnten bspw. beide Heiz-/Kühleinrichtungen mit der gleichen Heiz-/Kühlflüssigkeit versorgt werden, die in diesem Falle aus einem gemeinsamen Reservoir für temperierte Heiz-/Kühlflüssigkeiten gefördert wird. Gleiches gilt für die weiteren Möglichkeiten zum Heizen und/oder Kühlen. Ebenso ist es möglich, die Heiz-/Kühleinrichtung einerseits des Objektivrevolvers und andererseits des Probenhalters gemeinsam zu regeln, so daß in beiden Fällen exakt diegleiche Temperatur einstellbar ist.

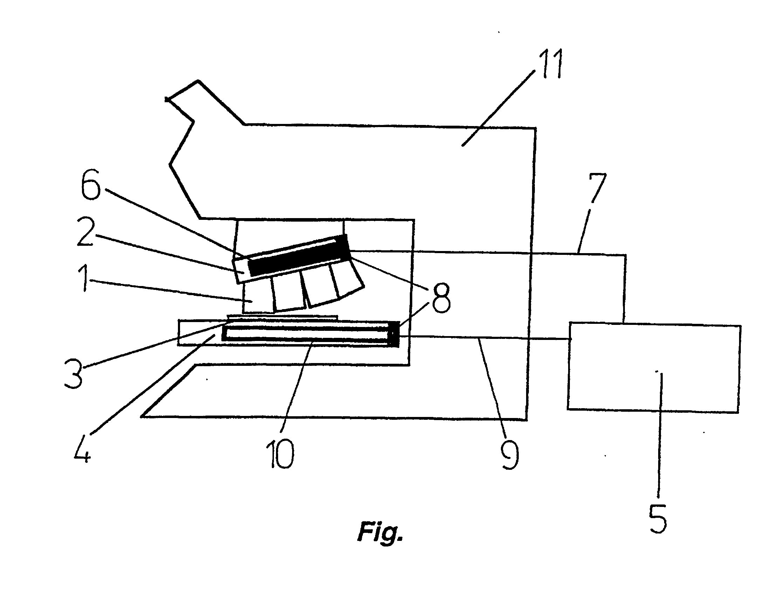

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung werden auch im allgemeinen bevorzugte Ausgestaltungen und Weiterbildungen der Lehre erläutert. In der Zeichnung zeigt
- die einzige Figur: in einer schematischen Darstellung ein Ausführungsbeispiel eines erfindungsgemäßen Mikroskops.

Die einzige Figur zeigt in schematischer Darstellung ein Mikroskop mit einem Objektive 1 tragenden Objektivrevolver 2 und mit einem zur Aufnahme einer Probe 3 dienenden Probenhalter 4. Der Einfachheit halber wird auf die Erörterung weiterer Einzelheiten des an sich bekannten Mikroskops verzichtet.

Erfindungsgemäß sind alle vom Objektivrevolver 2 getragenen Objektive 1 gleichzeitig über den Objektivrevolver 2 temperierbar. Bei dem hier gewählten Ausführungsbeispiel ist sowohl ein Kühlen als auch ein Heizen möglich.

Zur Realisierung einer konstanten Temperatur ist eine besondere Regelung 5 vorgesehen. Die Heiz-/Kühleinrichtung 6 umfaßt eine mit Strömungsmedium durchströmbare Leitung 7, die mit entsprechenden Kanälen in den Objektivrevolver 2 integriert ist. Als Kühl-/Heizmedium dient eine Flüssigkeit, wobei die Temperaturregelung im konkreten über einen Thermostat erfolgt. Hinsichtlich des Einsatzes alternativer Heiz/Kühleinrichtungen wird zur Vermeidung von Wiederholungen auf den allgemeinen Teil der Beschreibung verwiesen.

Des weiteren ist wesentlich, daß bei dem hier gewählten Ausführungsbeispiel auch der Probenhalter 4 temperierbar ist, wobei auch dieser über eine Leitung 9 mit einem kühlenden oder heizenden Strömungsmedium versorgt wird. Sowohl die Heiz/Kühleinrichtung 6 des Objektivrevolvers 2 als auch die Heiz-/Kühleinrichtung 10 des Probenhalters 4 ist an die gleiche Regelung 5 angeschlossen. Insoweit sind die Heiz/Kühleinrichtung 6 des Objektivrevolvers 2 und die Heiz-/Kühleinrichtung 10 des Probenhalters 4 gemeinsam regelbar.

Schließlich sei angemerkt, daß der Objektivrevolver (2) gegenüber dem Mikroskopstativ (11) thermisch isoliert ist. Insoweit ist eine ungewollte Wärmeleitung und somit ein ungewolltes Abkühlen der Objektive (1) weitestgehend vermieden.

Hinsichtlich weiterer, in der Figur nicht dargestellter Merkmale, wird auf den allgemeinen Teil der Beschreibung verwiesen.

## Patentansprüche

1. Mikroskop mit einem Objektive (1) tragenden Objektivrevolver (2) und mit einem zur Aufnahme einer Probe (3) dienenden Probenhalter (4),
**dadurch gekennzeichnet, daß** alle vom Objektivrevolver (2) getragenen Objektive (1) gleichzeitig durch eine Vorrichtung, die am Objektivrevolver (2) angeordnet ist, temperierbar sind.

2. Mikroskop nach Anspruch 1, **dadurch gekennzeichnet, daß** die Objektive (1) beheizbar sind.

3. Mikroskop nach Anspruch 1, **dadurch gekennzeichnet, daß** die Objektive (1) kühlbar sind.

4. Mikroskop nach einem der Ansprüche 1 bis 3, **dadurch gekennzeichnet, daß** eine Regelung (5) zur konstanten Temperierung vorgesehen ist.

5. Mikroskop nach einem der Ansprüche 1 bis 4, **dadurch gekennzeichnet, daß** um den Objektivrevolver (2) herum eine Heiz-/Kühleinrichtung (6) angeordnet ist.

6. Mikroskop nach Anspruch 5, **dadurch gekennzeichnet, daß** es sich bei der Heiz/Kühleinrichtung (6) um eine Heiz-/Kühlmanschette handelt.

7. Mikroskop nach einem der Ansprüche 1 bis 4, **dadurch gekennzeichnet, daß** in den Objektivrevolver (2) eine Heiz-/Kühleinrichtung (6) integriert ist.

8. Mikroskop nach einem der Ansprüche 5 bis 7, **dadurch gekennzeichnet, daß** die Heiz-/Kühleinrichtung (6) eine mit Strömungsmedium durchströmbare Leitung (7) umfaßt.

9. Mikroskop nach Anspruch 8, **dadurch gekennzeichnet, daß** es sich bei dem Strömungsmedium um eine Flüssigkeit handelt.

10. Mikroskop nach Anspruch 9, **dadurch gekennzeichnet, daß** die Temperaturregelung über einen Thermostat (8) erfolgt.

11. Mikroskop nach einem der Ansprüche 5 bis 7, **dadurch gekennzeichnet, daß** die Heiz-/Kühleinrichtung (6) Peltierelemente umfaßt.

12. Mikroskop nach einem der Ansprüche 5 bis 7, **dadurch gekennzeichnet, daß** die Heizeinrichtung (6) Heizwiderstände umfaßt.

13. Mikroskop nach Anspruch 11 oder 12, **dadurch gekennzeichnet, daß** die Heiz/Kühleinrichtung (6) elektronisch geregelt ist

14. Mikroskop nach einem der Ansprüche 1 bis 13, **dadurch gekennzeichnet, daß** der Objektivrevolver (2) gegenüber dem Mikroskopstativ (11) thermisch isoliert ist.

15. Mikroskop nach einem der Ansprüche 1 bis 14, **dadurch gekennzeichnet, daß** der Probenhalter (4) temperierbar ist.

16. Mikroskop nach Anspruch 15, **dadurch gekennzeichnet, daß** in den Probenhalter (4) eine Heiz-/Kühleinrichtung (10) integriert ist.

17. Mikroskop nach Anspruch 15 oder 16, **dadurch gekennzeichnet, daß** die Heiz/Kühleinrichtung (10) des Probenhalters (4) der des Objektivrevolvers (2) entspricht.

18. Mikroskop nach einem der Ansprüche 15 bis 17, **dadurch gekennzeichnet, daß** die Heiz-/Kühleinrichtung (6) des Objektivrevolvers (2) und die Heiz-/Kühleinrichtung (10) des Probenhalters (4) gemeinsam regelbar sind.

## Claims

1. A microscope with an objective turret (2) carrying an objective (1) and with a specimen holder (4) serving to receive a specimen (3), **characterized in that** all objectives (1) carried by the objective turret (2) are simultaneously adjustable for temperature by means arranged at the objective turret (2).

2. The microscope according to claim 1, wherein the objectives (1) can be heated

3. The microscope according to claim 1, wherein the objectives (1) can be cooled.

4. The microscope according to one of claims 1 to 3, wherein a regulating unit (5) for adjustment to a constant temperature is provided.

5. The microscope according to one of claims 1 to 4, wherein a heating/cooling device (6) is positioned around the objective turret (2).

6. The microscope according to claim 5, wherein die heating/cooling unit (6) is a heating/cooling sleeve.

7. The microscope according to one of claims 1 to 4, wherein a heating/cooling device (6) is integrated into the objective turret (2).

8. The microscope according to one of claims 5 to 7, wherein die heating/cooling device (6) includes a pipe (7) through which a flowing medium passes.

9. The microscope according to claim 8, wherein the flowing medium is a liquid.

10. The microscope according to claim 9, wherein die temperature is regulated by means of a thermostat (8).

11. The microscope according to one of the claims 5 to 7, wherein the heating/cooling device (6) includes Peltier elements.

12. The microscope according to one of the claims 5 In 7, wherein the heating/cooling device (6) includes heating resistors.

13. The microscope according to one of the claims 11 to 12, wherein the heating/cooling device (6) is electronically controlled.

14. The microscope according to one of the claims 1 to 13, wherein the objective turret (2) is thermally insulated from the microscope stand (11).

15. The microscope according to one of the claims 1 to 14, wherein the specimen holder (4) is adjusted for temperature.

16. The microscope according to claim 15, wherein a heating/cooling device (10) is integrated into the specimen holder (4).

17. The microscope according to the claims 15 or 16, wherein die heating/cooling device (10) of the specimen holder (4) corresponds In that of the objective turret (2).

18. The microscope according to one of claims 15 to 17, wherein die heating/cooling device (6) of the objective turret (2) and the heating/cooling device (10) of the specimen holder (4) are jointly regulated.

## Revendications

1. Microscope avec un revolver porte-objectifs (2) portant des objectifs (1) et avec un support d'échantillon (4) pour réceptionner un échantillon (3), **caractérisé en ce que** tous les objectifs (1) portés par le revolver porte-objectifs (2) peuvent être tempéré simultanément par un dispositif, qui est fixé au revolver porte-objectifs (2).

2. Microscope selon revendication 1, **caractérisé en ce que** les objectifs peuvent être échauffé.

3. Microscope selon revendication 1, **caractérisé en ce que** les objectifs peuvent être refroidit.

4. Microscope selon l'une quelconque des revendications 1 à 3, **caractérisé en ce que** un dispositif de réglage (5) pour tempérer constant est prévu.

5. Microscope selon l'une quelconque des revendications 1 à 4, **caractérisé en ce que** un dispositif à chauffer/refroidir (6) est arrangé autour du revolver porte-objectifs (2).

6. Microscope selon revendication 5, **caractérisé en ce que le** dispositif à chauffer/refroidir (6) est une manchette à chauffer/refroidir.

7. Microscope selon l'une quelconque des revendications 1 à 4, **caractérisé en ce que** un dispositif à chauffer/refroidir (6) est intégré dans le revolver porte-objectifs (2).

8. Microscope selon l'une quelconque des revendications 5 à 7, **caractérisé en ce que** le dispositif à chauffer/refroidir (6) comprend une conduite à écoulement, qui peut être écoulé par un fluide.

9. Microscope selon revendication 8, **caractérisé en ce que** le fluide est un liquide.

10. Microscope selon revendication 9, **caractérisé en ce que** le réglage de température est réalisé par un thermostat.

11. Microscope selon l'une quelconque des revendications 5 à 7, **caractérisé en ce que** le dispositif à chauffer/refroidir (6) comprend des éléments Peltier.

12. Microscope selon l'une quelconque des revendications 5 à 7, **caractérisé en ce que** le dispositif à chauffer/refroidir (6) comprend des résistances chauffantes.

13. Microscope selon l'une quelconque des revendications 11 ou 12, **caractérisé en ce que** le dispositif à chauffer/refroidir (6) est réglé électroniquement.

14. Microscope selon l'une quelconque des revendications 1 à 13, **caractérisé en ce que** le revolver porte-objectifs (2) est isolé thermiquement du statif du microscope (11).

15. Microscope selon l'une quelconque des revendications 1 à 14, **caractérisé en ce que** le support d'échantillon (4) peut être tempéré.

16. Microscope selon revendication 15, **caractérisé en ce que** un dispositif à chauffer/refroidir (10) est intégré dans le support d'échantillon (4).

17. Microscope selon l'une quelconque des revendications 15 ou 16, **caractérisé en ce que** le dispositif à chauffer/refroidir (10) du support d'échantillon (4) correspond à celle du revolver porte-objectifs (2)

18. Microscope selon l'une quelconque des revendications 15 à 17, **caractérisé en ce que** le dispositif à chauffer/refroidir (6) du revolver porte-objectifs (2) et le dispositif à chauffer/refroidir (10) du support d'échantillon (4) peuvent être réglé ensemble.
